# EUROPEAN PATENT APPLICATION

(11) **EP 1 455 131 A1**
(43) Date of publication of application: **08.09.2004**
(21) Application number: 04100863.2
(22) Date of filing: 03.03.2004
(51) Int. Cl.: F16L 37/40

(54) **Gripping member for a fast-fit safety coupling**

(30) Priority: 04.03.2003 IT TO20030160
(71) Applicant: Pres-Block S.P.A., 10040 Caselette (IT)
(72) Inventor: Nicolino, Aldo, 10040 Caselette (IT)
(74) Representative: Jorio, Paolo, Dr. Ing.

(57) **Abstract**

A gripping member (4) for a fast-fit safety coupling (1), having a tubular main body (10) connectable to a first pipe (2); a slide valve member (11) fitted to slide axially inside the main body (10), and maintained by a spring (12) in a closed position separating the first pipe (2) in fluidtight manner from the surrounding environment; releasable primary connecting means (25) defining a forward coupled position of an endpiece (5) of a second pipe (3) inside the main body (10), to connect the first and second pipe (2, 3) hydraulically; and releasable secondary connecting means (26) for retaining the endpiece (5), upon release of the primary connecting means (25), in a withdrawn safety position in which the endpiece (5) is connected mechanically to the main body (10), and the valve member (11) is in the closed position permitting leakage of the work fluid; the secondary connecting means (26) include releasable retaining means (50) which cooperate with the endpiece (5) to prevent it from being detached from the main body (10), are controlled by the pressure of the work fluid inside the main body (10), and are disabled by the aforementioned pressure falling below a predetermined threshold value (Pₒ).

## Description

The present invention relates to a gripping member for a fast-fit safety coupling for fluidtight connecting two pressurized work fluid, in particular compressed air or gas, pipes.

Non-safety, fast-fit couplings are known which substantially comprise a normally substantially cylindrical gripping member connected to a first of said pipes; and a normally substantially cylindrical endpiece connected to a second of said pipes, and which fits releasably, in a coupled position, inside the gripping member.

The gripping member comprises a hollow main body connected to the first pipe; a slide valve member fitted in axially sliding manner inside the main body; a garter spring interposed between the main body and the valve member, and which exerts axial thrust on the valve member to keep it in a first operating position hermetically separating the first pipe from the outside environment; and releasable stop means for securing the endpiece to the gripping member in the coupled position, in which the endpiece exerts greater and opposite thrust on the valve member, with respect to that exerted by the spring, to keep the valve member in a second operating position hydraulically connecting the first and second pipe.

A major drawback of couplings of the above type is that, when disconnecting the coupling, the fluid pressure and the reaction of the spring expel the endpiece violently from the gripping member, thus endangering and, at times, injuring the user, or at least damaging machinery or any nearby objects.

To eliminate the above drawback, fast-fit safety couplings have been devised, as described, for example, in International Patent Applications n. W099/19657 and W001/55632 filed by the present Applicant, and in which the gripping member comprises axially spaced first and second releasable stop means. More specifically, the first stop means cooperate with the endpiece to lock it in the coupled position, i.e. in the position opposing the action of the spring and keeping the valve member in the open second operating position; while the second stop means, upon release of the first stop means and when disconnecting the endpiece from the gripping member, cooperate with and keep the endpiece in a withdrawn safety position, in which the endpiece is connected mechanically to the main body, allows the valve member to return to the first operating position isolating the first pipe in fluidtight manner, and also allows the work fluid inside the coupling to leak out.

The first stop means are interposed between the main body and the valve member, and the second stop means comprise releasable connecting means carried by the valve member and which cooperate with the endpiece to make it integral with the valve member as the endpiece moves between the withdrawn safety position and the forward coupled position.

The first and second stop means are released by the user, by means of ring nuts or pushbuttons, in two successive stages. More specifically, to disconnect the endpiece from the gripping member, the user first releases the first stop means to cut off fluid connection between the pipes connected by the coupling, and to allow the work fluid left inside the coupling to leak out, and then releases the second stop means. Couplings of this sort are designed to prevent disconnection of the endpiece from the gripping member unless the above operations are performed in the order described.

Though extremely safe and reliable, couplings of the above type are not very practical in use, by requiring two successive operations whenever the endpiece is detached from the gripping member.

It is an object of the present invention to provide a gripping member for a fast-fit safety coupling, designed to eliminate the above drawback typically associated with known couplings, in a straightforward, low-cost manner, while at the same time maintaining the same degree of safety.

According to the present invention, there is provided a gripping member for a fast-fit safety coupling, as claimed in Claim 1.

A preferred, non-limiting embodiment of the present invention will be described by way of example with reference to the accompanying drawings, in which:
Figure 1 shows an axial section of a fast-fit safety coupling featuring a gripping member in accordance with the present invention, and a standard endpiece fitted in a coupled position to the gripping member;
Figure 2 shows an axial section of the Figure 1 coupling in a safety condition;
Figure 3 shows a larger-scale detail of Figure 2;
Figure 4 shows a larger-scale view in perspective of a detail of the Figure 1 and 2 gripping member;
Figures 5, 6 and 7 show a front, side and rear view respectively of a further detail of the Figure 1 and 2 gripping member.

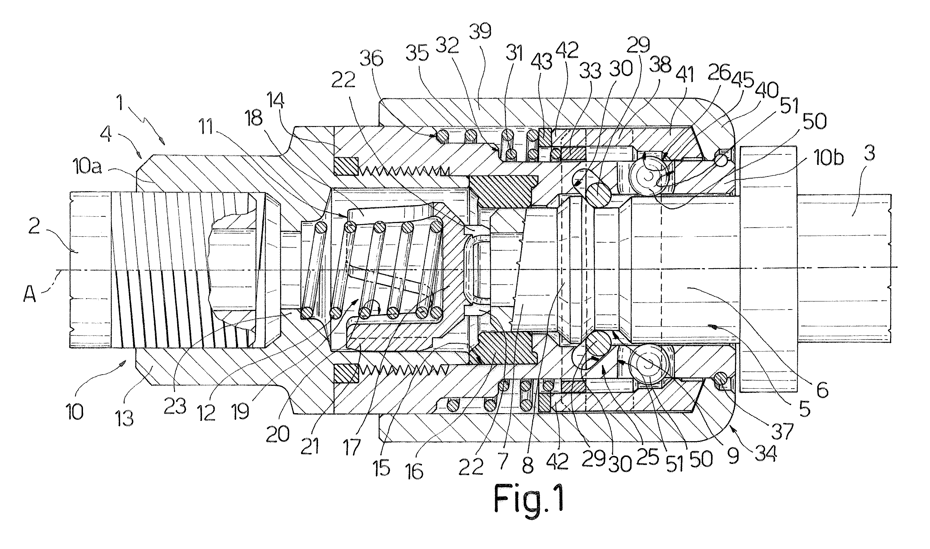

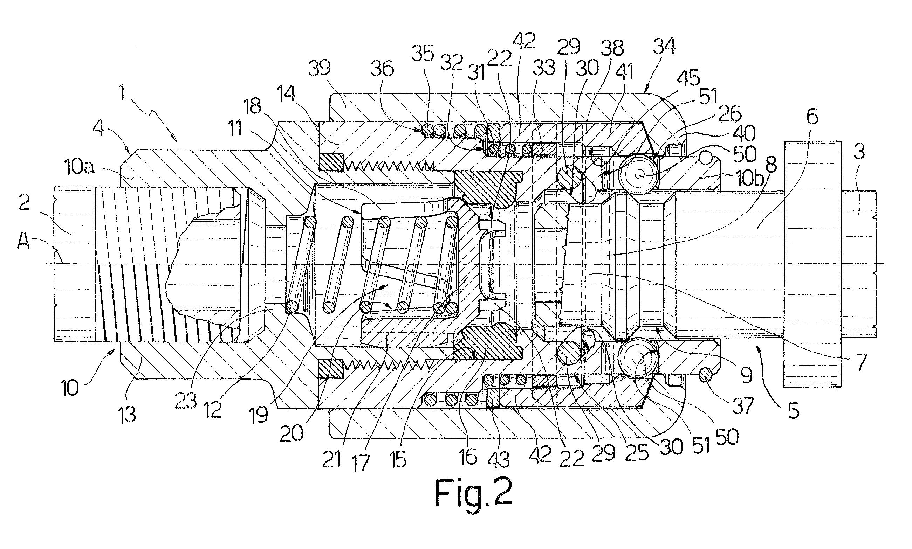

With reference to Figures 1 and 2, number 1 indicates as a whole a fast-fit safety coupling for fluidtight connecting two pipes 2, 3 for a pressurized work fluid, in particular compressed air or gas.

Coupling 1 has a longitudinal axis A, and comprises a gripping member 4 in accordance with the present invention, and which is substantially cylindrically symmetrical about axis A and connected to pipe 2; and a standard known endpiece 5 (not forming part of the present invention) which is also substantially cylindrically symmetrical, is connected to pipe 3, and fits releasably to gripping member 4.

Endpiece 5 - which is described solely to permit a clear understanding of the characteristics of gripping member 4 - is substantially tubular about axis A, and comprises two cylindrical portions 6, 7, of different diameters, connected to each other by a truncated-cone-shaped intermediate portion 8. More specifically, the larger-diameter portion 6 is connected, in use, to pipe 3 and comprises an outer annular retaining groove 9; while portion 7 defines the free end of endpiece 5.

Gripping member 4 substantially comprises a substantially cylindrical tubular main body 10, of axis A, fixed, e.g. screwed, to pipe 2 by a respective end portion 10a, and for receiving endpiece 5 through a respective opposite end portion 10b; a slide valve member 11 fitted to move axially inside main body 10 between a hermetically closed position (Figure 2) isolating pipe 2 in fluidtight manner from the surrounding environment, and an open position (Figure 1) permitting fluid flow from pipe 2 through main body 10; and a helical spring 12, of axis A, housed inside main body 10 and exerting thrust on valve member 11 to keep it in the closed position.

More specifically, main body 10 is defined by two tubular members 13, 14, of axis A, which have respective adjacent ends screwed to each other, and define respective end portions 10a, 10b on opposite sides of the coupled portion.

At the coupled portion, tubular members 13, 14 define an inner annular seat 15 for a sealing ring 16. More specifically, sealing ring 16 has one axial end facing the inlet of endpiece 5 and resting against an inner annular shoulder of tubular member 14; and an opposite axial end, the radially outermost portion of which rests against an inner annular shoulder of tubular member 13, and the radially innermost portion of which cooperates with valve member 11 to define the closed position of valve member 11.

With reference to Figures 1, 2, 5, 6 and 7, valve member 11 is substantially cup-shaped, of axis A, and is substantially defined by an end wall 17, a peripheral edge of which cooperates with sealing ring 16; and by a cylindrical lateral wall 18 internally defining a cavity 19, and having, externally, a number of (in the example shown, three) angularly equally spaced windows 20, and a number of (also three) angularly equally spaced fins 21 which cooperate in sliding manner with the inner surface of tubular member 14, and define, together with windows 20, respective passages for the work fluid.

Valve member 11 also comprises a number of (in the example shown, three) projections 22 which project axially from end wall 17, on the opposite side to lateral wall 18, are equally spaced angularly about axis A, cooperate at the ends with endpiece 5, and define respective lateral passages permitting work fluid flow between endpiece 5 and fins 21.

When valve member 11 is in the closed position (Figure 2), projections 22 are surrounded on the outside by sealing ring 16, and interaction between sealing ring 16 and the peripheral edge of end wall 17 prevents the work fluid from flowing between pipes 2 and 3.

Spring 12 is interposed between an annular projection 23, formed inside tubular member 13 of main body 10, and end wall 17 of valve member 11, is housed partly inside cavity 19, and defines the closed position of valve member 11 by keeping end wall 17, in the absence of opposing forces, resting against the facing axial end of sealing ring 16.

Conversely, in the open position (Figure 1), the peripheral edge of end wall 17 of valve member 11 is detached from sealing ring 16 to connect the passages formed by fins 21 and projections 22.

Gripping member 4 also comprises a releasable primary connecting device 25 defining, in use, a forward coupled position (Figure 1) of endpiece 5 inside main body 10, in which endpiece 5 keeps valve member 11 in the open position in opposition to spring 12; and a releasable secondary connecting device 26 which, upon release of primary connecting device 25, cooperates with and retains endpiece 5 in a withdrawn safety position (Figure 2) in which endpiece 5 is connected mechanically to tubular member 14 of main body 10, allows valve member 11 to be returned to the closed position by spring 12, and also allows the work fluid inside main body 10, between sealing ring 16 and conduit 3, to leak out.

Primary and secondary connecting devices 25, 26 are both carried by main body 10, and cooperate with groove 9 on endpiece 5 to define the forward coupled position (Figure 1) and the withdrawn safety position (Figure 2) of endpiece 5 respectively.

More specifically, primary connecting device 25 comprises two cylindrical bars 29 which are housed inside respective transverse grooves 30 formed internally on diametrically opposite sides of tubular member 14, have respective axes parallel to each other and perpendicular to axis A, and slide inside grooves 30, to and from axis A, between an internally extracted position (Figure 1) in which they engage groove 9 on endpiece 5 to mechanically connect main body 10 and endpiece 5, and an internally withdrawn position (Figure 2) permitting release of endpiece 5 from main body 10.

More specifically, grooves 30 are formed in tubular member 14 between sealing ring 16 and end portion 10b of tubular member 14.

In the internally extracted position (Figure 1), bars 29 have respective intermediate portions projecting partly inside tubular member 14 to engage groove 9 on endpiece 5; and, in the internally withdrawn position (Figure 2), the intermediate portions of bars 29 are located between the radially inner and outer surfaces of tubular member 14 to permit withdrawal of endpiece 5.

More specifically, each groove 30 is defined by parallel sides sloping with respect to axis A and diverging towards valve member 11 with respect to the corresponding sides of the other groove 30.

As shown in Figures 1, 2 and 4, each bar 29 has opposite ends projecting outwards with respect to tubular member 14.

Bars 29 are loaded axially into the internally extracted position by a garter spring 31 wound about tubular member 14 of main body 10 and interposed between bars 29 and an outer shoulder 32 of tubular member 14 adjacent to sealing ring 16 and facing the free end from which endpiece 5 is inserted.

More specifically, spring 31 acts on an annular member 33 fitted to slide axially along the outer surface of tubular member 14, and interposed between spring 31 and bars 29.

When inserting endpiece 5 inside tubular member 14 of main body 10, truncated-cone-shaped portion 8 exerts axial thrust on bars 29, in opposition to spring 31, to slide bars 29 along respective grooves 30 into the internally withdrawn position; and, as truncated-cone-shaped portion 8 moves past bars 29, these are pushed by spring 31 back into the internally extracted position engaging groove 9 on endpiece 5 and defining the forward coupled position of endpiece 5 (Figure 1).

Bars 29 are released from endpiece 5 by a manually operated control assembly 34 mounted to slide axially on the outer surface of tubular member 14 of main body 10, and loaded by a garter spring 35 extending about tubular member 14 and spring 31, and acting in the same direction as spring 31.

More specifically, spring 35 has one end cooperating with control assembly 34, and an opposite end resting against an annular shoulder 36 of tubular member 14 formed adjacent to, radially outwards of, and offset axially with respect to, shoulder 32. More specifically, in the example shown, shoulder 32 is located axially forward with respect to shoulder 36, towards end portion 10b of tubular member 14.

Control assembly 34 is loaded by spring 35 towards a stop ring 37 projecting radially outwards from the free end edge of end portion 10b of tubular member 14.

Control assembly 34 comprises a substantially cylindrical, radially inner first ring nut 38, of axis A, which slides along end portion 10b of tubular member 14 and cooperates with the relative end of spring 35; and a cylindrical, radially outer second ring nut 39, of axis A, which is mounted to slide axially on ring nut 38 and on the portion of tubular member 14 having shoulder 36, and has an end flange 40 interposed between stop ring 37 and the opposite side of ring nut 38 to that cooperating with spring 35. In other words, ring nut 39 and tubular member 14 define an annular seat housing spring 35.

More specifically, ring nut 39 is moved manually and axially away from stop ring 37 to produce a corresponding axial movement of ring nut 38 in opposition to spring 35, and so release bars 29 to commence detachment of endpiece 5 from gripping member 4.

Ring nut 38 advantageously comprises a main portion 41 which slides along the outer surface of end portion 10b of tubular member 14 and rests at one axial end against flange 40 of ring nut 39; and two arms 42 which project axially from the opposite axial end of main portion 41, are located on diametrically opposite sides of axis A, slide along respective outer flat portions 49 of annular member 33, and cooperate at their free ends with spring 35 via the interposition of a further annular member 43.

The structure described provides for minimizing the overall radial size of gripping member 4.

Main portion 41 of ring nut 38 is defined inwards by a cylindrical surface 44 terminating, on the side adjacent to annular member 33, with an annular recess 45 for the purpose explained below.

More specifically (Figures 1, 2 and 3), recess 45 is open on the side facing annular member 33, and is defined, on the opposite side, by a conical end surface defining a sloping side 46 of an inner annular projection 47 formed between recess 45 and cylindrical surface 44 and cooperating in sliding manner with the outer surface of end portion 10b of tubular member 14.

More specifically, annular projection 47 has a trapezoidal cross section, and is defined, towards recess 45, by sloping side 46, and, on the opposite side, by a slightly conical side 48.

Ring nuts 38 and 39 are maintained by spring 35 in a rest position resting axially against stop ring 37, and are movable axially, in opposition to both springs 35 and 31, into a release position in which they keep bars 29 in the internally withdrawn position.

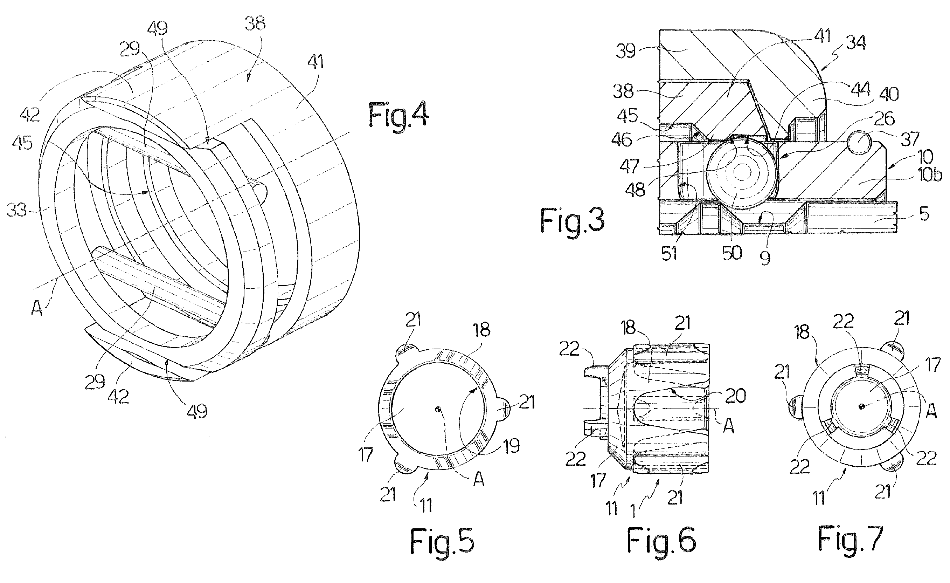

Secondary connecting device 26 comprises a number of (in the example shown, four) balls 50, which are housed, axially loosely and in radially rolling manner, inside respective angularly equally spaced radial through seats 51 formed in end portion 10b of tubular member 14, and are movable between an internally extracted configuration (Figures 2 and 3), in which they project inside tubular member 14 and engage groove 9 on endpiece 5 to prevent detachment of the endpiece from main body 10 in the event of release of primary connecting device 25, and an internally withdrawn configuration (Figure 1), in which they are substantially located inside the radially inner surface of tubular member 14 to permit release of endpiece 5.

As shown in Figures 1, 2 and 3, balls 50 are larger in diameter than the radial dimension of respective seats 51, so that, in the internally withdrawn configuration, they project radially outwards of tubular member 14.

More specifically, when ring nut 38 is in the rest position, recess 45 faces and communicates with seats 51 to permit free axial and radial movement of balls 50 between the internally withdrawn and extracted configurations.

In the release position (Figures 2 and 3), ring nut 38 keeps bars 29 in the internally withdrawn position, and, seats 51 and recess 45 being axially offset, inner cylindrical surface 44 of ring nut 38 pushes balls 50 into the internally extracted configuration engaging the groove on endpiece 5, thus preventing detachment of endpiece 5 from gripping member 4.

Upon release of primary connecting device 25 and resulting closure of valve member 11, balls 50 (Figures 2 and 3) are advantageously subjected to the thrust of the outward-leaking work fluid left inside main body 10, and, for work fluid pressures over and above a predetermined threshold value Pₒ, are pushed towards ring nut 38 to retain it, by interaction with annular projection 47, in the release position, and are themselves kept by ring nut 38 in the internally extracted position preventing full release of endpiece 5 from gripping member 4.

In other words, when primary connecting device 25 is released by operation of control assembly 34, which results in valve member 11 moving into the closed position, the pressure of the work fluid left inside main body 10, as long as it remains above threshold value Pₒ, temporarily activates secondary connecting device 26 to prevent endpiece 5 from being detached violently from gripping member 4.

The release position of ring nut 38 is made temporarily stable by the thrust exerted on balls 50 by the outward-leaking work fluid left inside main body 10.

Threshold value Pₒ is a function of the geometry, and in particular the depth, of annular projection 47 of ring nut 38.

Assembly of coupling 1 will now be described as of an initial configuration in which endpiece 5 is fully extracted from gripping member 4; valve member 11 is in the closed position (Figure 2) separating pipes 2 and 3 by means of sealing ring 16; ring nuts 38 and 39 of control assembly 34 are pushed by spring 35 into the rest position, i.e. resting against stop ring 37; bars 29 are pushed by spring 31 into the internally extracted position (Figure 1); and the configuration of control assembly 34 allows balls 50 to move freely inside respective seats 51 and respective recesses 45.

When inserting endpiece 5 inside main body 10, bars 29 and, with them, annular member 33 are pushed by interaction with truncated-cone-shaped portion 8 of endpiece 5 into the internally withdrawn position and towards shoulder 32 respectively, in opposition to spring 31.

As groove 9 on endpiece 5 moves into line with bars 29, the thrust exerted by spring 31 on annular member 33 pushes bars 29 along respective grooves 30 back into the internally extracted position engaging groove 9 and so connecting endpiece 5 mechanically to main body 10.

At the same time, portion 7 of endpiece 5 acts on projections 22 of valve member 11 to compress spring 12 and move valve member 11 into the open position (Figure 1) .

At this stage, the work fluid from pipe 2 flows through windows 20 and between fins 21 of valve member 11, then through the gaps between projections 22 into endpiece 5 and then pipe 3.

As already shown, endpiece 5 is disconnected from gripping member 4 in one operation, by simply moving ring nut 39, together with ring nut 38, in opposition to spring 35.

More specifically, as it is moved axially, ring nut 38 acts directly on bars 29 to slide them along respective grooves 30 and out of groove 9 on endpiece 5. At this point, the thrust exerted by spring 12 and the pressurized fluid clicks valve member 11 into the closed position, in which the peripheral edge of end wall 17 rests against sealing ring 16, and pushes out endpiece 5.

In this condition, pipes 2 and 3 are separated hermetically by valve member 11 contacting sealing ring 16.

As ring nut 38 is moved in opposition to spring 35, annular projection 47 moves past balls 50 towards bars 29, and surface 44 is positioned facing seats 51 so as to push balls 50 into the internally extracted configuration. At the same time, as it leaks out, the pressurized work fluid left inside main body 10 pushes balls 50 against surface 44 of ring nut 38, so that balls 50 interfere with annular projection 47 to prevent ring nut 38 from moving back into the rest position.

Balls 50, projecting radially inwards of tubular member 14, therefore engage groove 9 on endpiece 5 being expelled from gripping member 4, so as to retain the endpiece inside gripping member 4.

Until the pressure of the work fluid left inside main body 10 falls below threshold value Pₒ, balls 50 are pushed against surface 44 of ring nut 38, and interact with annular projection 47 to prevent extraction of endpiece 5.

As the work fluid left inside gripping member 4 leaks out, and the pressure inside main body 10 falls below threshold value P_{o,} balls 50 release ring nut 38, which thus moves back into the rest position, in which recesses 45 are aligned axially with seats 51 to release balls 50, and endpiece 5 can be extracted safely from gripping member 4, on account of the absence of pressure inside main body 10.

The interval between operating ring nut 39 and extracting endpiece 5 is normally very short, and equal to a few seconds or a fraction of a second, depending on the pressures involved.

In the event ring nuts 38 and 39, as they are pushed in opposition to spring 35, are inadvertently released before projection 47 clicks past balls 50, spring 35 restores both ring nuts 38, 39 to the rest position with no effect on bars 29 and, therefore, on release of endpiece 5 from gripping member 4.

The advantages of gripping member 4 according to the present invention will be clear from the foregoing description.

In particular, the fact that secondary connecting device 26 is controlled by the pressure of the work fluid inside main body 10 means endpiece 5 can safely be disconnected from gripping member 4 in one operation (by activating control assembly 34). Only when the pressure of the work fluid inside main body 10 falls below threshold value Pₒ is secondary connecting device 26 automatically released, and endpiece 5 freed.

Clearly, changes may be made to gripping member 4 according to the present invention without, however, departing from the scope of the accompanying Claims.

## Claims

1. A gripping member (4) connectable to a first pipe (2) supplying a pressurized work fluid, and connectable releasably to a standard endpiece (5) of a second pipe (3) supplying said work fluid, to define a fast-fit safety coupling (1), said gripping member (4) having a longitudinal axis (A), and comprising:
- a substantially tubular main body (10) connectable to said first pipe (2);
- a slide valve member (11) fitted to slide axially inside said main body (10), and maintained by first elastic means (12) in a closed position separating said first pipe (2) in fluidtight manner from the surrounding environment;
- releasable primary connecting means (25) defining a forward coupled position of said endpiece (5) inside said main body (10), in which said endpiece (5) exerts on said valve member (11) a thrust in opposition to and greater than the thrust exerted by said first elastic means (12), and keeps the valve member (11) in an open position hydraulically connecting said first and second pipe (2, 3); and
- releasable secondary connecting means (26) which cooperate with said endpiece (5) to retain it, upon release of said primary connecting means (25) and when disconnecting the endpiece (5) from said main body (10), in a withdrawn safety position in which said endpiece (5) is connected mechanically to said main body (10), and said valve member (11) is in the closed position enabling the work fluid in said main body (10) to leak out;
**characterized in that** said secondary connecting means (26) comprise releasable retaining means (50) which cooperate with said endpiece (5) to prevent it from being detached from said main body (10), are controlled by the pressure of the work fluid inside the main body (10), and are disabled by said pressure falling below a predetermined threshold value (Pₒ).

2. A gripping member as claimed in Claim 1, **characterized by** comprising control means (34) movable along said axis (A) and in opposition to second elastic means (35) into a release position, in which they release said primary connecting means (25) and define a stop for said retaining means (50) to keep the retaining means connected to said endpiece (5); said retaining means (50) being pushed, by the pressure of the work fluid inside said main body (10), against said control means (34) to prevent the control means from moving from said release position.

3. A gripping member as claimed in Claim 2, **characterized in that** said retaining means comprise at least one engaging member (50) movable radially, with respect to said main body (10), between an engaged position engaging said endpiece (5), and a release position releasing the endpiece (5); and **in that** said control means (34) comprise at least one ring nut (38) movable axially with respect to said main body (10) to vary the radial position of said engaging member (50).

4. A gripping member as claimed in Claim 3, **characterized in that** said ring nut (38) comprises at least one inner radial projection (47) which rests axially against said engaging member (50) in said engaged position to retain the ring nut (38) in said release position.

5. A gripping member as claimed in Claim 3 or 4, **characterized in that** said engaging member (50) is mounted movably inside a radial through seat (51) formed in said main body (10), and is larger, radially with respect to said axis (A), than the radial dimension of said seat (51), so as to project inwards of said main body (10) in said engaged position, and outwards of the main body (10) in said release position; said ring nut (38) having an opposing surface (44) which, when facing said seat (51), pushes said engaging member (50) into said engaged position, and at least one inner cavity (45) adjacent to said opposing surface (44) and which, when aligned axially with said seat (51), at least partly houses said engaging member (50) in said release position.

6. A gripping member as claimed in Claim 5, **characterized in that** said projection (47) of said ring nut (38) is interposed between said cavity (45) and said opposing surface (44).
